# EUROPEAN PATENT APPLICATION

(11) **EP 1 386 697 A2**
(43) Date of publication of application: **04.02.2004**
(21) Application number: 03013995.0
(22) Date of filing: 20.06.2003
(51) Int. Cl.: B25B 5/12

(54) **Clamping device for work pieces**

(30) Priority: 02.08.2002 IT MI20021756
(71) Applicant: Migliori, Luciano, 20124 Milan (IT)
(72) Inventor: Migliori, Luciano, 20124 Milan (IT)
(74) Representative: Coloberti, Luigi

(57) **Abstract**

A clamping device for work pieces; the device comprises a box-shaped body (10) having un longitudinal axis (A), at least one movable gripping member (11), and control means for moving the clamping member (11) comprising an articulated system having an L-shaped lever (19) connected to a control member by a toggle lever device; an arm (19') of the lever (19) defines a first connecting rod pivotally supported by the body (10) of the clamping device by a first pivotal axis (20) and connected to the clamping member (11) by a first articulation axis (21). A second connecting rod (23) is pivotally supported by the box-shaped body (10) to rotate according to a second pivotal axis (24), and in turn is connected to the clamping member (11) by a second articulation axis (25). The two connecting rods (19', 23) are of different lengths, and the pivotal axes (20, 24) or articulation axes (21, 25) lie in a plane passing through a reference line (L) which forms an angle (α) with respect to the longitudinal axis (A) of the box-shaped body (10).

## Description

### BACKGROUND OF THE INVENTION

This invention relates to a clamping device provided with toggle lever control system for clamping work pieces, in particular for clamping, positioning and/or centring metal sheets, in the automobile or motor vehicle construction, or for other similar uses.

### STATE OF THE ART

In general, clamping or gripping devices of the toggle-lever type are known, which are normally used for clamping, positioning and/or centring work pieces or metal sheets, along edges or through appropriate holes, by clamping them against a shoulder surface of the same clamping device, or to an external supporting structure.

A clamping device of the aforementioned type, for example described in DE -A- 39 36 396, comprises a box-shaped body having a longitudinal axis, and a gripping member movable between an advanced non-operative position and a retracted operative position for restraining a work piece.

The clamping device is also provided with control means for moving the gripping member, which comprise a thrust member sliding parallel to the longitudinal axis of the box-shaped body, an intermediate toggle connecting rod and an articulated quadrilateral system.

The articulated system in turn comprises an L-shaped lever pivotally supported by the box-shaped body to rotate according to a first pivotal axis. A first arm of the L-shaped lever defines a connecting rod of the articulated system, which is connected to the gripping member to rotate according to a first articulation axis; a second arm of the L-shaped lever is in turn connected by a toggle-lever joint to the aforesaid control means.

The articulated system also comprises a second connecting rod pivotally supported by the box-shaped body to rotate according to a second pivotal axis, and in turn connected to the gripping member by a second articulation axis.

The first and the second connecting rod of the articulated quadrilateral system move parallel with each other and are of identical length; in addition, the pivotal axes of the connecting rods, and the articulation axis of the second arm of the L-shaped lever joined to the intermediate connecting rod of the control means, lie along a reference line parallel to the longitudinal axis of the box-shaped body.

A solution of this kind however presents the drawback that the gripping member, in reciprocating from the advanced position to the retracted position for restraining a work piece, moves parallel to the longitudinal axis of the box-shaped body. In certain cases, a solution of this kind can greatly hinder or prevent the clamping of a work piece; in fact, whenever the work piece to be clamped has one or more protruding edges which are likely to interfere with the movement of the gripping member, the latter may encounter difficulty in overcoming such edges during the clamping movement, or its own movement may be prevented.

In addition, whenever it is necessary to replace the gripping member, for example whenever the work piece to be coupled is of a different thickness or a different shape, it is necessary to remove and open the box-shaped body to gain access to the articulating axes of the gripping member, and be able to remove and replace it; this entails complex maintenance procedures which consume long operative times.

Whenever it is necessary to clamp one or more work pieces in several points, the clamping device can be fitted with a first and a second gripping member, as for example described in US -A- 6,199,873.

A clamping device of this kind is provided with control means for conjointly moving the gripping members, which comprise a sliding thrust member and a particular toggle-lever mechanism for connecting the gripping members to the thrust member.

This toggle lever mechanism however possesses a number of drawbacks, in that the connection with the gripping members is achieved by means of pivot pins which slide in shaped guide slots provided along the coupling members, according to a structurally complex solution.

The coupling between the pivot pins and the guide slots also generates frictional forces and backlash, thereby making it impossible to achieve a precise movement of the gripping members and a sufficient clamping force for restraining the work pieces.

### OBJECTS OF THE INVENTION

The main object of this invention is to provide a clamping device for positioning and retaining work pieces, of the aforementioned kind, comprising at least one gripping member, which is structurally simple, highly reliable, and whereby it is also possible to easily clamp work pieces of a complex design by means of a precise movement of the gripping member, thanks to the practical absence of frictional forces and backlashes, and without creating interferences between the work piece and the gripping member itself.

A further object of this invention is to provide a clamping device of the aforementioned kind, in which the gripping member can be easily replaced without removing and opening the box-shaped body of the device, thereby allowing easy maintenance and a reduction in servicing times and machine or installation down times, during the aforesaid operation.

### BRIEF DESCRIPTION OF THE INVENTION

According to a first embodiment of the invention, a clamping device has been provided for gripping and positioning a work piece, the device comprising:
- a box-shaped body having a longitudinal axis;
- at least one gripping member partially protruding from a front end of said box-shaped body, said gripping member being movable between an advanced non-operative position and a retracted operative position for restraining the work piece;
- control means for moving the gripping member, said control means comprising a thrust member sliding parallel to the longitudinal axis of the box-shaped body of the device, said gripping member being operatively connected to the thrust member by an articulated quadrilateral system and an intermediate toggle-lever mechanism, and in which said articulated system comprises:
   an L-shaped lever pivotally supported by the box-shaped body to rotate according to a first pivotal axis, said L-shaped lever having a first arm connected to the gripping member by a first articulation axis; the first arm of the L-shaped lever defining a first connecting rod of the articulated system;
   a second connecting rod pivotally supported by the box-shaped body to rotate according to a second pivotal axis, said second connecting rod being in turn connected to the gripping member by a second articulation axis;
characterised in that the first and the second connecting rods of the articulated system are of different lengths, and
in that the pivotal axes, or articulation axes of said first and second connecting rods, lie in a plane passing through a reference line which forms an angle with the longitudinal axis of the box-shaped body of the clamping device.

According to a further embodiment of the invention, a clamping device for a work piece has been provided, comprising:
- un box-shaped body having a longitudinal axis;
- first and second gripping members, reversably disposed, which partially protrude from a front end of said box-shaped body, said gripping members being movable between an advanced non-operative position and a retracted operative position in which they restrain the work piece; and
- control means for moving the gripping members,
characterised in that
said control means comprise a thrust member sliding parallel to the longitudinal axis of the box-shaped body, one of said gripping members being operatively connected to the thrust member by a toggle-lever mechanism;
in that each of the said gripping member is operatively connected to the toggle-lever mechanism by a respective first and second articulated quadrilateral system, each articulated system comprising a respective connecting rod pivotally supported by the box-shaped body to rotate according to a pivotal axis, and
in that the pivotal axes of said connecting rods are operatively connected to each other by a gear mechanism, for transmitting and synchronising their movement.

### BRIEF DESCRIPTION OF THE DRAWINGS

These and further features according to this invention, will be more clearly evident from the following description with reference to the accompanying drawings, in which:
- Fig. 1 shows a longitudinal cross-sectional view of a clamping device having a simple gripping member, in the advanced position in which it disengages a work piece;

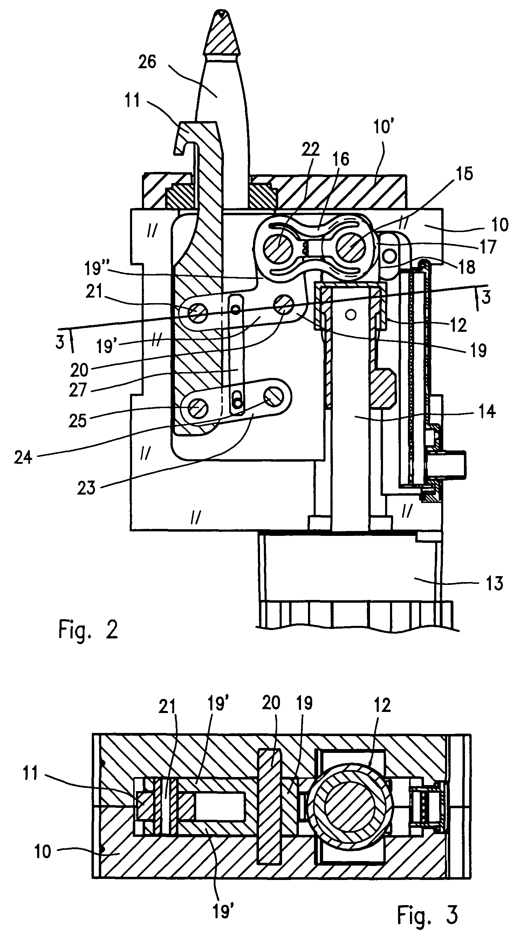

- Fig. 2 shows a longitudinal cross-sectional view of the clamping device of figure 1 with the gripping member in a retracted position in which it restrains a work piece;
- Fig. 3 shows a cross-sectional view, along the line 3-3, of Fig. 2;
- Fig. 4 shows a longitudinal cross-sectional view of a clamping device having first and second gripping members, in the advanced position in which they disengage a work piece;
- Fig. 5 shows a longitudinal cross-sectional view of the clamping device of figure 4, with the first and second gripping members, in a retracted position in which they restrains a work piece;
- Fig. 6 shows a cross-sectional view of a detail of the clamping device.

### DETAILED DESCRIPTION OF THE INVENTION

The general features of this invention will be illustrated hereunder by means of some exemplificative embodiments.

According to a first exemplificative embodiment of the invention, illustrated in the figures from 1 to 3, the clamping device for positioning and gripping work pieces, comprises a box-shaped body 10 having a longitudinal axis A, and at least one gripping member 11, in this case one.

The gripping member 11 partially protrudes from front end of the box-shaped body 10, moving between an advanced non-operative position and a retracted operative position in which it restrains the work piece against a shoulder surface or clamping plate 10', disposed at the front end of the box-shaped body 10.

The clamping device also comprises control means for moving the gripping member 11, between said operative and non-operative positions: the control means comprises a thrust member 12, sliding parallel to the longitudinal axis A of the box-shaped body 10, which is operatively connected to a suitable actuator, such as for example a pneumatic or electric linear actuator 13 having a rod 14 movable with the thrust member 12, or connected to a manually operable control lever, not shown.

The thrust member 12 extends advanced with a fork portion 12' to which an intermediate toggle connecting rod 16, preferably of the controlled elastically yielding type, is connected by a pivot pin 15 coaxially disposed to the pin 15 of the intermediate connecting rod 16, are guiding rollers 17 movable along longitudinal guides 18 on the box-shaped body 10.

The intermediate connecting rod 16 is in turn rotatably connected by a pin 18 to an aim 19' ' of an L-shaped lever 19 forming part of an articulated quadrilateral system, forming part of the control means for controlling the movement of the gripping member 11.

In particular, the articulated system comprises the aforesaid L-shaped lever 19 pivotally supported by the box-shaped body 10 to rotate according to a first pivotal axis 20; the lever 19 is provided with an arm 19' connected to the gripping member 11 to rotate according to a first articulation axis 21, the second arm 19' ' of the lever 19 is articulated in 22 to the intermediate connecting rod 16 to define a toggle-lever mechanism operatively connected to the thrust member 12' of the aforesaid control means.

The first arm 19' of the L-shaped lever 19 defines a first connecting rod of the articulated quadrilateral system; the latter comprises also a second connecting rod 23 pivotally supported by the box-shaped body 10 to rotate according to a second pivotal axis 24; the second connecting rod 23 is in turn connected to a gripping member 11 is connected, by means of a pin 15 by a second articulation axis 25.

According to a first aspect of the invention, the first and the second connecting rod 19', 23 of the articulated quadrilateral system, each have a respective longitudinal axis and are of different lengths from each other, with the first connecting rod 19' which preferably is of greater length than that of the second connecting rod 23 of the articulated system.

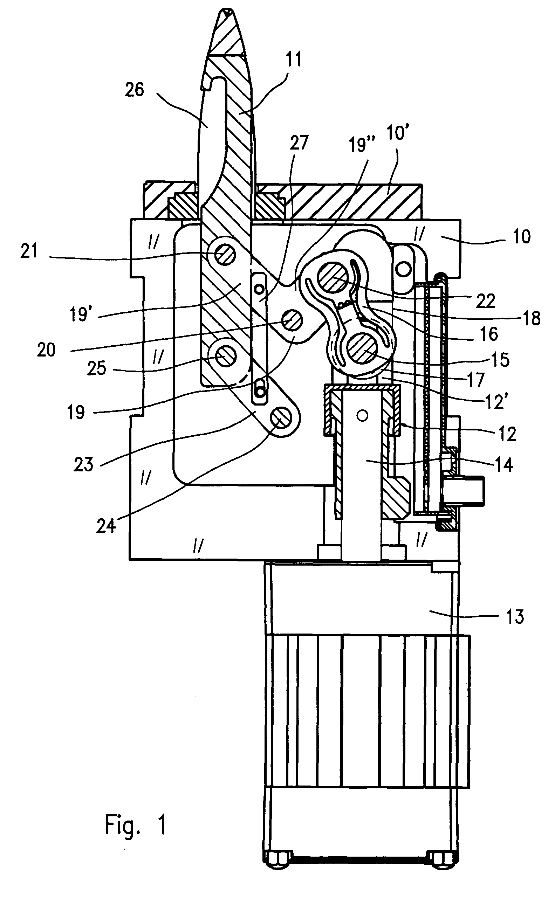

Moreover, the pivotal axes 20, 24 or the articulation axes 21, 25 of the first and the second connecting rod 19', 23, lie in a plane passing through a reference line which forms an angle α with respect to the longitudinal axis A of the box-shaped body 10, as shown in figure 1.

In the advanced position of the gripping member 11, the longitudinal axes of the first and the second connecting rod 19', 23 of the articulated quadrilateral system are slanted with respect to the longitudinal axis of the box-shaped body 10.

Moreover, the longitudinal axes of the first and the second connecting rod 19', 23 form an angle with each other preferably ranging from 2° to 10°, diverging in a direction opposite, to or facing away the thrust member 12.

In the direction of the longitudinal axis of the box-shaped body 10, the distance between the pivotal axes 20, 24 for the first and the second connecting rod 19', 23 is different, preferably less than the distance between the articulation axes 21, 25 of aforesaid connecting rods 19', 23 to the gripping member 11.

In the retracted position of the gripping member 11, the pivotal axes 20, 24 of the first and the second connecting rod 19', 23 are in a shortly advanced position with respect to the corresponding articulation axes 21, 25 of the aforesaid connecting rods, viewed in the direction of the longitudinal axis of the box-shaped body 10.

Due to the disposition of the pivotal axes 20, 24 and the articulation axes 21, 25, and the length of the connecting rods 19', 23 of the articulated quadrilateral system, the gripping member 11, in moving from its advanced position to its retracted position, also performs a rotational movement, so as to approach the work piece only when it is in the vicinity of its retracted restraining position.

Since the intermediate connecting rod 16 reaches its dead centre when its pivoting and articulating points 15, 22 are in line with the contact points between the guide rollers 17 and the slide guides 18 of the box-shaped body 10, when the gripping member 11 is moved in its retracted position in which it restrains the work piece, the intermediate connecting rod 16 disposes itself just a little beyond its dead centre, in a condition of irreversibility of the movement, thereby preventing any accidental disengagement of the work piece by any external force.

The front end of the box-shaped body 10 can be provided with a centring element 26, having a longitudinal cavity for housing the gripping member 11 in its advanced position, and from which protrudes the hook shaped end of the gripping member 11 in its retracted position, in which it restrains the work piece. This is necessary, for example, whenever, in addition to the gripping function, the device has to carry out a work piece centring function.

To allow a quick and easy replacement of the gripping member 11, its articulation axes 21, 25 consist of pins which can be removed by axially withdrawing them from aligned apertures in the box-shaped body 10.

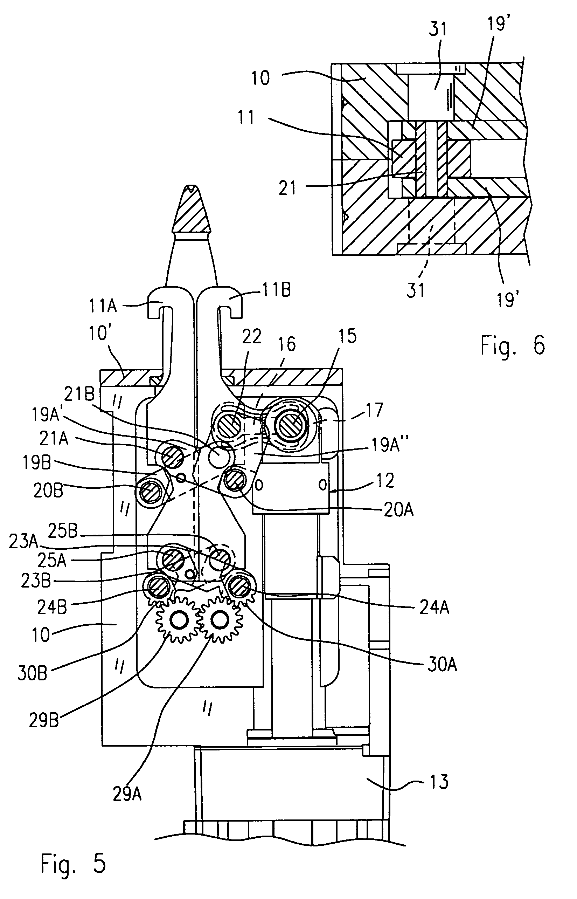

This may be done by removing a plug 31 from each of the aforesaid apertures in the box-shaped body 10, as shown in figure 6, in an appropriate position of the gripping member 11 in which the pins 21, 25 are aligned with the same apertures in the box-shaped body 10; since the pins 21, 25 are provided with an internal threaded hole, it is possible to remove each pin 21,25 by means of an extractor which is inserted into the hole.

Alternatively, the box-shaped body 10 can be provided with axially aligned apertures at both ends of the pins 21, 25; in this case, the plugs 31 are removed from both the apertures and each pin 21, 25 is pushed until it slips out of the gripping member 11 and the connecting rods 19', 23.

In this way it is possible to remove the pins from the outside, without removing the box-shaped body 10, and opening the same with an obvious saving of time.

In order to prevent the second connecting rod 23 of the articulated quadrilateral from moving with respect to the first connecting rod 19' when the gripping member 11 is removed, the device can be provided with a bar 27 connected in an intermediate position to both the connecting rods 19', 23. The connection between the rods 19', 23 and the bar 27 is achieved by means of pins, one of which is moving in a slot in the bar 27 itself.

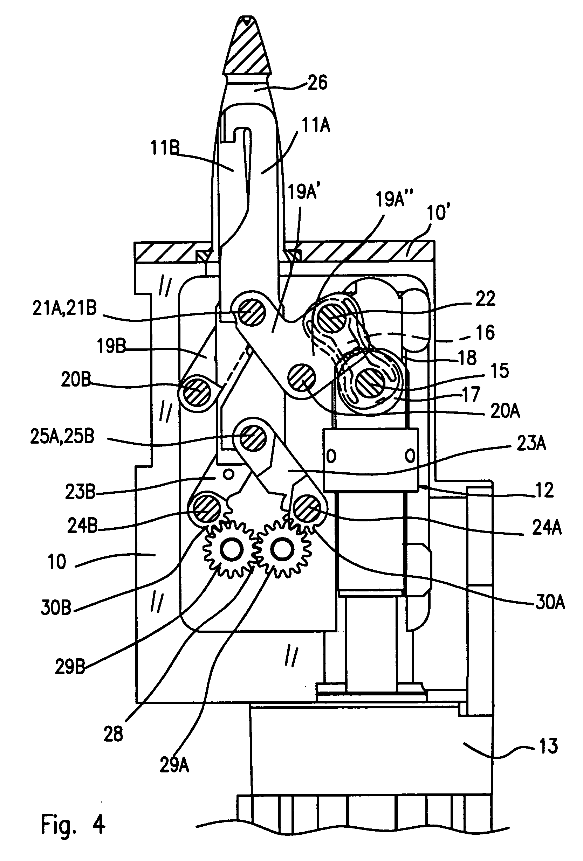

A second exemplificative embodiment of this invention is shown in figures 4 and 5, in which the same reference numbers have been used to indicate similar or equivalent parts.

The toggle-action coupling device again comprises a box-shaped body 10 having a longitudinal axis; in this case the device comprises opposite first and second gripping members 11A, 11B, which partially protrude from the front end of the box-shaped body 10 and which are movable between an advanced non-operative position and a retracted operative position in which they restrain a work piece.

The clamping device also comprises control means for moving the gripping members 11A, 11B, which in turn again comprise a sliding thrust member 12, connected to the aforesaid control member, and a toggle system which includes an intermediate connecting rod 16 for connecting both the coupling members 11A, 11B to the thrust member 12.

The control means further comprise first and second articulated quadrilateral systems, each operatively connected to a respective gripping member 11A, 11B as per example of figure 1; more precisely the aforesaid intermediate connecting rod 16 in particular connects the thrust member 12 with one of the two articulated quadrilateral systems.

The other one of the two articulated quadrilateral systems, is operatively connected to the first one by means of a gear mechanism 28 for transmission and synchronisation of the movement.

The first articulated quadrilateral system comprises a first connecting rod 19A' pivotally supported by the box-shaped body 10 to rotate according to a first pivotal axis 20A, and is connected to the first gripping member 11A by a first articulation axis 21A; moreover, the first articulated quadrilateral system comprises a second connecting rod 23A pivotally supported by the box-shaped body 10 to rotate according to a second pivotal axis 24A, and in turn connected to the first gripping member 11A by a second articulation axis 25A.

The second articulated quadrilateral system has a similar configuration, and in particular comprises again a first connecting rod 19B pivotally supported by the box-shaped body 10 to rotate according to a first pivotal axis 20B, which is connected to the second gripping member 11B by a second articulation axis 21B; moreover, the second articulated quadrilateral system comprises a second connecting rod 23B pivotally supported by the box-shaped body 10 to rotate according to a second pivotal axis 24B, and in turn connected to the second gripping member 11B by a second articulating axis 25B.

The first and the second connecting rod 19A',19B,23A,23B of each articulated quadrilateral system have a respective longitudinal axis and are of different lengths from each other. In particular, the first connecting rod 19A' of the first articulated quadrilateral system is preferably shorter in length than the second connecting rod 23A, while the first connecting rod 19B of the second articulated quadrilateral system is of greater length than that of the second connecting rod 23B.

In addition, the pivotal axes 20A, 24A or articulation axes 21A, 25A of the first and the second connecting rod 19A', 23A of the first articulated quadrilateral, lie in a plane passing through a reference line which forms again an angle with respect to the longitudinal axis of the box-shaped body 10.

Likewise, the pivotal axes 20B, 24B or articulation axes 21B, 25B of the first and the second connecting rod 19B, 23B of the second articulated system, lie in a plane passing through a respective reference line which forms the same angle with respect to the longitudinal axis of the box-shaped body 10.

The first connecting rod 19A' of the first articulated is in the form of an L shaped member comprising an arm 19A'' to which is articulated the intermediate connecting rod 16 for the toggle-action connection with the first gripping member 11A.

In the retracted position of the first and the second gripping members 11A, 11B, the longitudinal axes of the first and the second connecting rods 19A', 19B, 23A, 23B of each articulated quadrilateral system are slanted with respect to the longitudinal axis of the box-shaped body 10.

Still in the retracted position of the first and the second gripping members 11A, 11B, the longitudinal axes of the first and second connecting rods 19A', 23A of the first articulated quadrilateral system form an angle with each other ranging from 2° to 10°; likewise, for the first and second connecting rods 19B, 23B of the second articulated quadrilateral system. In both cases, it is preferable for the connecting rods to diverge towards the thrust member 12.

In the direction of the longitudinal axis of the box-shaped body 10, the distance between the pivotal axes 20A, 24A for the first and second connecting rod 19A', 23A of the first articulated quadrilateral system to the box-shaped body is different, preferably greater than the distance between the articulation axes 21A, 25A for the first and second connecting rod 19A', 23A of the first gripping member 11A.

In the direction of the longitudinal axis of the box-shaped body 10, the distance between the pivotal axes 20B, 24B for the first and the second connecting rods 19B, 23B of the second articulated quadrilateral system to the box-shaped body is different, preferably less than the distance between the articulation axes 21B, 25B for the first and the second connecting rod 19B, 23B of the second gripping member 11B.

The aforesaid set of gears for transmission and synchronisation of the movements comprises a pair of intermediate gears 29A, 29B, each of which is meshing with a respective crown gear 30A, 30B coaxially arranged to the respective pivotal axis 24A, 24B of the second connecting rods 23A, 23B of articulated quadrilateral systems of the clamping device.

In the retracted position of the gripping members 11A,11B, the pivotal axes 20A, 24A of the first and the second connecting rod 19A', 23A of the first articulated quadrilateral system are in a retracted position with respect to the corresponding articulation axes 21A,25A for the connecting rods to the first gripping member 11A, viewed in the direction of the longitudinal axis of the box-shaped body 10.

Likewise, the pivotal axes 20B, 24B of the first and the second connecting rods 19B, 23B of the second articulated quadrilateral system are in a retracted position with respect to the corresponding articulation axes 21B, 25B for the connecting rods to the second gripping member 11B, viewed again in the direction of the longitudinal axis of the box-shaped body 10.

The articulating axes 21A, 25A, 21B, 25B connecting each coupling member 11A, 11B to a respective articulated quadrilateral system are again provided by pins which can be removed through axially aligned apertures in the box-shaped body 10. In particular, in the advanced position of the gripping members 11A, 11B, the articulation axes 21A, 21B, of the first connecting rods 19A', 19B are aligned with each other to enable the pins to be easily removed; likewise for the axes 25A, 25B of the second connecting rods 23A, 23B.

The clamping device may again comprise a centring element 26 secured to the front end of the box-shaped body 10, having a cavity for housing both the gripping members 11A, 11B in their advanced position, as well as lateral slits from which the gripping members 11A, 11B protrude in their retracted position in which they restrain a work piece.

What has been described and shown with reference to the accompanying drawings has been given purely by way of example in order to illustrate the general features of the invention, as well as some of its preferred embodiments; therefore other modifications and variations to the clamping device are possible, without thereby departing from the scope of the claims.

## Claims

1. A clamping device for gripping and positioning a work piece, the device comprising:
- a box-shaped body (10) having a longitudinal axis;
- at least one gripping member (11) partially protruding from a front end of said box-shaped body (10), said gripping member (11) being movable between an advanced non-operative position and a retracted operative position for restraining the work piece;
- control means for moving the gripping member, said control means (11) comprising a thrust member (12) sliding parallel to the longitudinal axis of the box-shaped body (10)of the device, said gripping member (11) being operatively connected to the thrust member (12) by an articulated quadrilateral system and an intermediate toggle-lever mechanism (16), and in which said articulated system comprises:
an L-shaped lever (19) pivotally supported by the box-shaped body (10) to rotate according to a first pivotal axis (20), said L-shaped lever (19) having a first arm (19') connected to the gripping member (11) by a first articulation axis (21); the first arm (19') of the L-shaped lever (19) defining a first connecting rod (19') of the articulated system;
a second connecting rod (23) pivotally supported by the box-shaped body (10) to rotate according to a second pivotal axis (24), said second connecting rod being in turn connected to the gripping member (11) by a second articulation axis (25);
**characterised in that** the first and the second connecting rods (19', 23) of the articulated system are of different lengths, and
**in that** the pivotal axes (20, 24), or articulation axes (21, 25) of said first and second connecting rods (19', 23), lie in a plane passing through a reference line (L) which forms an angle with the longitudinal axis (A) of the box-shaped body (10) of the clamping device.

2. A clamping device for a work piece comprising:
- a box-shaped body (10) having a longitudinal axis;
- first and second gripping members (11A, 11B), reversably disposed, which partially protrude from a front end of said box-shaped body (10), said gripping members (11A, 11B) being movable between an advanced non-operative position and a retracted operative position in which they restrain the work piece; and
- control means for moving the gripping members (11A, 11B), **characterized in that**
said control means comprise a thrust member (12) sliding parallel to the longitudinal axis of the box-shaped body (10), one of said gripping members (11A, 11B) being operatively connected to the thrust member by a toggle-lever mechanism,
**in that** each of the said gripping member (11A, 11B) is operatively connected to a first and respectively to a second articulated quadrilateral system, each articulated system comprising a connecting rod (23A, 23B) pivotally supported by the box-shaped body (10) to rotate according to a pivotal axis (24A, 24B), and
**in that** the pivotal axes (24A, 24B) of said connecting rods (23A, 23B) are operatively connected to each other by a gear mechanism (28).

3. A clamping device according to claim 2, **characterised in that** each articulated quadrilateral system comprises a first connecting rod (19A', 19B) pivotally supported by the box-shaped body (10) to rotate according to a first pivotal axis (20A, 2GB), each of said first connecting rod (19A', 19B) being connected to a respective gripping member (11A, 11B) by a first articulation axis (21A, 21B); a second connecting rod (23A, 23B) pivotally supported by the box-shaped body (10) to rotate according to a second pivotal axis (24A, 24B), the second connecting rod (23A, 23B) being in turn connected to the respective gripping member (11A, 11B) by a second articulation axis (25A, 25B),
**in that** the first and the second connecting rods (19A', 23A, 19B, 23B) of each articulated quadrilateral system are differing in lengths from each other, and
**in that** the pivotal axes (20A, 24A, 20B, 24B) or articulation axes (21A, 25A, 21B, 25B) of said first and second connecting rods (19A', 23A, 19B, 23B) of each articulated quadrilateral system, lie in a respective plane passing through a respective reference line which forms an angle with respect to the longitudinal axis of the box-shaped body (10).

4. A clamping device according to claim 3, **characterised in that** the first connecting rod (19A') of one of said articulated quadrilateral system is provided by a side arm (19A'') of a L shaped lever (19) articulated to the intermediate connecting rod (16) toggle-lever mechanism for connection to the thrust member (12) of the control means.

5. A clamping device according to claim 1 or 3, in which the first and the second connecting rod (19, 23, 19A', 23A, 19B, 23B) of each articulated quadrilateral system have a respective longitudinal axis, **characterised in that**, in the retracted position of the gripping member (11, 11A, 11B), the longitudinal axes of the first and the second connecting rod (19, 23, 19A', 23A, 19B, 23B) are slanted with respect to the longitudinal axis of the box-shaped body (10).

6. A clamping device according to claim 5, **characterised in that** the longitudinal axes of said first and second connecting rod (19, 23, 19A', 23A, 19B, 23B) form an angle with each other ranging from 2° to 10°.

7. A clamping device according to claim 5, **characterised in that**, in the direction of the longitudinal axis of the box-shaped body (10), the distance between the pivotal axes (20, 24, 20A, 24A, 20B, 24B) of said first and second connecting rod (19', 23, 19A', 23A, 19B, 23B) of the articulated quadrilateral system differs from to the distance between the articulation axes (21, 25, 21A, 25A, 21B, 25B) for said first and second connecting rods (19', 23, 19A', 23A, 19B, 23B).

8. A clamping device according to claim 1 or 3, **characterised by** comprising a centring element (26) fastened to a first end of the box-shaped body (10), said centring element (26) being provided with a cavity for housing the gripping member (11, 11A, 11B) in its advanced position, and at least one lateral slit from which the gripping member (11, 11A, 11B) protrudes in its retracted position.

9. A clamping device according to claim 1, **characterised in that** the first connecting rod (19') has a length greater than that of the second connecting rod (23).

10. A clamping device according to claim 3, **characterised in that** the first connecting rod (19A') of the first articulated quadrilateral system has a length shorter than that of the second connecting rod (23A) of the same first articulated quadrilateral system, and
**in that** the first connecting rod (19B) of the second articulated quadrilateral system has a length greater than that of the second connecting rod (23B) of the same second articulated quadrilateral system.

11. A clamping device according to claim 2, **characterised in that** said gear mechanism comprises a pair of intermediate gear member (29A, 29B), each of said gear members (29A, 29B) meshing with a respective crown gear (30A, 30B) coaxially arranged to the respective pivotal axis (24A, 24B) of the second connecting rods (23A, 23B) of each articulated quadrilateral system of the clamping device.

12. A clamping device according to claim 1, **characterised in that**, in the retracted position of the gripping member (11), the pivotal axes (20, 24) of said first and second connecting rods (19', 23) are in an advanced position with respect to the corresponding articulation axes (21, 25) for connection to the gripping member (11), viewed in the direction of the longitudinal axis of the box-shaped body (10).

13. A clamping device according to claim 2, **characterised in that**, in the retracted position of each gripping member (11A, 11B), the pivotal axes (20A, 24A, 20B, 24B) of said first and second connecting rod (19A', 23A, 19B, 23B) are in a retracted position with respect to the corresponding articulation axes (21A, 25A, 21B, 25B) for connection to each gripping member (11A, 11B), viewed in the direction of the longitudinal axis of the box-shaped body (10).

14. A clamping device according to claim 1 or 2, **characterised in that** said control means for moving the gripping member (11, 11A, 11B) comprise a manually operable control lever operatively connected to the sliding thrust member (12) of the clamping device.

15. A clamping device according to claim 1 or 2, **characterised in that** said control means for moving the gripping member (11, 11A, 11B) comprise a linear actuator (13) operatively connected to the sliding thrust member (12) of the clamping device.

16. A clamping device according to claim 1 or 2, **characterised in that** the articulation axes (21, 25, 21A, 25A, 21B, 25B) of the gripping member (11, 11A, 11B) are consisting of articulation pins removably fitted through aligned apertures in the box-shaped body (10) of the clamping device.
